Europäisches Patentamt

**European Patent Office**

Office européen des brevets

(19)

(11) Numéro de publication : **0 041 463**
**B1**

(12) # FASCICULE DE BREVET EUROPÉEN

(45) Date de publication du fascicule du brevet :
**18.01.84**

(51) Int. Cl.³ : **C 03 C 17/09, C 03 C 17/36**

(21) Numéro de dépôt : **81400887.6**

(22) Date de dépôt : **04.06.81**

(54) **Procédé de fabrication de vitrages métallisés semi-réfléchissants à couche d'ancrage améliorée et vitrages obtenus par ce procédé.**

(30) Priorité : **04.06.80 FR 8012449**

(43) Date de publication de la demande :
**09.12.81 Bulletin 81/49**

(45) Mention de la délivrance du brevet :
**18.01.84 Bulletin 84/03**

(84) Etats contractants désignés :
**BE DE FR GB IT LU NL**

(56) Documents cités :
**FR-A- 2 037 986**
**GB-A- 1 524 393**
**US-A- 3 826 728**

(73) Titulaire : **SAINT-GOBAIN VITRAGE**
**Les Miroirs 18, avenue d'Alsace**
**F-92400 Courbevoie (FR)**

(72) Inventeur : **Cohen, Sabatino**
**1, rue Madeleine Crenon**
**F-92330 Sceaux (FR)**

(74) Mandataire : **Eudes, Marcel et al**
**Saint-Gobain Recherche 39 Quai Lucien Lefranc**
**F-93304 Aubervilliers Cedex (FR)**

EP 0 041 463 B1

Jouve, 18, rue St-Denis, 75001 Paris, France

Procédé de fabrication de vitrages métallisés semi-réfléchissants à couche d'ancrage améliorée et vitrages obtenus par ce procédé

L'invention concerne des vitrages métallisés semi-réfléchissants, simples ou multiples, à couche d'ancrage améliorée.

On sait que l'on désigne sous le nom de vitrages semi-réfléchissants des vitrages comprenant un revêtement d'une ou de plusieurs couches d'un métal, d'un alliage ou d'un composé métallique, d'épaisseur suffisamment mince pour transmettre au moins partiellement la lumière visible mais d'une nature telle qu'il réfléchisse la majeure partie du rayonnement infra-rouge. De tels vitrages ont ainsi l'avantage de s'opposer en été au passage vers l'intérieur des radiations infra-rouges solaires et en hiver à la transmission vers l'extérieur de celles réémises par le local.

De très nombreux types de tels vitrages ont été proposés dans la technique, mais les plus couramment utilisés comprennent en général trois couches superposées, à savoir une couche d'ancrage qui est en contact avec la surface du vitrage et dont le rôle est principalement d'assurer une excellente adhérence et une bonne structure des couches qu'on lui superpose, une couche intermédiaire destinée à conférer au vitrage ses caractéristiques optiques dominantes et une couche superficielle protectrice permettant d'ajuster aux valeurs recherchées les propriétés de transmission du spectre visible et de réflexion du rayonnement infra-rouge. La couche d'ancrage est par exemple constituée d'un alliage au nickel-chrome. La couche intermédiaire comprend habituellement de l'or, de l'argent ou du cuivre. Quant à la couche superficielle, elle est généralement constituée par un diélectrique tel que l'oxyde de silicium, le sulfure de zinc ou un oxyde mixte d'indium et d'étain. On peut aussi interposer une couche de diélectrique sous la couche réfléchissante, etc.

C'est essentiellement ce type de vitrages multicouches que concerne la présente invention, qui vise d'abord à proposer, pour la fabrication de vitrages à couches, notamment d'ancrage, contenant du nickel et du chrome, un procédé faisant appel à l'évaporation thermique sous vide tout en présentant des avantages importants par rapport aux procédés antérieurs utilisant cette technique.

Les couches à base de nickel et de chrome, en effet, sont généralement déposées, selon ces procédés, à l'aide de creusets d'évaporation en un métal très réfractaire tel que le tungstène par exemple, et les alliages de nickel et de chrome qu'ils préconisent provoquent, à la température usuelle d'évaporation, d'environ 1 500 °C, une forte corrosion des creusets, entraînant assez souvent des mises hors service de ceux-ci. La mise en œuvre à l'échelle industrielle de ces procédés de dépôt est donc difficile sur des vitrages de grandes dimensions et conduit à un coût élevé, du fait d'un grand nombre de rebuts.

L'invention vise à remédier à ces inconvénients en proposant, pour la fabrication de vitrages à revêtements métallisés semi-réfléchissants contenant du nickel et du chrome, un alliage susceptible d'être évaporé thermiquement sous vide à l'aide de creusets d'évaporation en métal réfractaire sans provoquer de notable corrosion desdits creusets, et qui peut donc être évaporé par un creuset donné en quantités plus importantes que les matériaux utilisés d'ordinaire pour déposer du chrome et du nickel, sans crainte de provoquer la destruction prématurée de celui-ci, les couches obtenues possédant en outre d'excellentes qualités d'ancrage sur le verre pour d'éventuelles couches d'or, d'argent ou de cuivre déposées en complément.

Au cours des travaux qui ont conduit à la présente demande, il a en effet été constaté avec surprise que, si un alliage à base de chrome et de nickel contient en outre du molybdène, et éventuellement du tungstène, il répond aux exigences exprimées ci-dessus, en particulier au plan de la longévité des creusets d'évaporation. Les meilleurs alliages à cet égard appartiennent à un type d'alliages connus pour leur résistance à la corrosion et leur résistance mécanique à haute température, dits Hastelloy.

Des alliages apparentés, contenant de petites quantités de molybdène à côté du nickel et du chrome comme constituants principaux, ont déjà été proposés par le brevet US-A-3 826 728, parmi de nombreuses autres formules d'alliages ne contenant pas de molybdène, pour préparer des revêtements métallisés, mais ce brevet décrit seulement leur emploi par le procédé de dépôt dit de pulvérisation cathodique, et en vue de l'obtention de couches épaisses, de 200 à 400 Å, conférant à elles seules les propriétés optiques souhaitées pour les vitrages.

Ce document n'apporte donc aucun enseignement sur l'influence de la présence du molybdène dans les couches réalisées à partir de ces alliages quant aux propriétés d'ancrage qu'elles peuvent jouer à l'égard des couches dites ci-dessus intermédiaires, constituées d'or, d'argent ou de cuivre. Il ne mentionne la technique de l'évaporation thermique sous vide que pour lui comparer celle de la pulvérisation cathodique dans le cas du dépôt d'un métal pur (nickel et chrome), et démontrer l'avantage qu'apporte cette dernière technique au plan des propriétés optiques recherchées, en plus de ceux qui lui sont usuellement reconnus quant à l'homogénéité du dépôt. Il ne renseigne donc nullement sur l'influence éventuelle du molybdène dans la technique d'évaporation thermique avec creuset de métal réfractaire, pas plus que sur celle des nombreux autres éléments optionnels qu'il propose avant de citer, en dernier rang, le molybdène.

Par ailleurs, comme on l'a dit plus haut, divers documents antérieurs, comme les brevets FR-A-2 037 986 et GB-A-1 524 393, mentionnent les propriétés des couches contenant du chrome et du nickel pour assurer l'ancrage de couches semi-réfléchissantes d'or, d'argent ou de cuivre, mais aucun n'envisage, ni ne suggère d'introduire du molybdène dans l'alliage à évaporer.

L'invention a par conséquent pour objet un procédé de fabrication de vitrages à revêtement métallisé semi-réfléchissant comprenant un support rigide transparent, tel que feuille de verre, muni d'au moins une couche déposée par évaporation thermique sous vide d'un alliage contenant du chrome et du nickel, à l'aide de creusets d'évaporation en un métal très réfractaire, selon lequel ledit alliage soumis à l'évaporation thermique comporte en outre du molybdène et éventuellement du tungstène, du fer et/ou du cobalt, les teneurs cumulées en nickel, fer et cobalt étant comprises entre 55 et 75 % en poids, celle du chrome entre 5 et 31 % et celle de l'ensemble des éléments molybdène et tungstène entre 3 et 28 %.

Des compositions préférées d'alliages selon l'invention comportent 40 à 63 % en poids de nickel, 2 à 20 % de fer, avec une teneur cumulée en nickel, fer et cobalt de 58 à 68 %, 15 à 25 % de chrome, 5 à 18 % de molybdène et 0 à 6 % de tungstène, avec une teneur cumulée en molybdène et tungstène de 5 à 22 %.

Il a aussi été constaté qu'il est avantageux en outre de limiter la teneur pondérale en fer de l'alliage à un tiers des teneurs cumulées en nickel, fer et cobalt, en vue de la réalisation d'une couche d'ancrage de bonne durabilité.

En pratique, les alliages Ni-Cr-Mo commerciaux à 6,5 % de Mo (avec Nb + Ta de l'ordre de 2,1 %), à 9 % de Mo et surtout à 17 % de Mo et 4 % de W conviennent entièrement à la mise en œuvre de l'invention.

La couche d'ancrage ainsi obtenue est particulièrement bien adaptée, comme le montreront les exemples donnés dans la suite de la présente description, à la réalisation de vitrages semi-réfléchissants à spectre de transmission sélectif comportant, outre cette couche, une couche d'un diélectrique, tel que SiO, ZnS ou un oxyde mixte $SnO_2$-$In_2O_3$, et une couche d'or, d'argent ou de cuivre.

On peut, en outre, interposer avantageusement entre la couche intermédiaire et la couche superficielle une couche additionnelle constituée du même alliage que la couche d'ancrage.

Ainsi qu'il a été indiqué ci-dessus, l'alliage utilisé comme couche d'ancrage, dans le cadre de la présente invention, a des propriétés d'adhérence au verre au moins égales à celles des matériaux connus utilisés dans la technique antérieure pour cette application ; ces propriétés permettent de fabriquer d'excellents vitrages feuilletés en interposant une couche de matière plastique, en particulier du polyvinylbutyral, entre une feuille de verre et un vitrage dont le revêtement semi-réfléchissant conforme à l'invention, tourné vers la couche de polyvinylbutyral sera en outre mis de préférence en contact avec cette dernière par l'intermédiaire d'une couche selon l'invention. De tels vitrages feuilletés entrent également dans le cadre de la présente invention.

Le procédé de dépôt de couches selon l'invention peut être mis en œuvre à l'aide des techniques connues usuelles de l'évaporation thermique sous vide. Ainsi, de préférence, la surface du verre est préalablement nettoyée superficiellement à l'aide d'une suspension d'oxyde de cérium dans de l'eau et de l'alcool. La feuille de verre sur laquelle s'effectue le dépôt étant installée dans l'enceinte sous vide dans laquelle est conduite l'évaporation thermique, on y réalise un vide peu poussé d'environ 100 millitorrs et le nettoyage du verre est complété à l'aide d'une effluve électrique d'une durée de 10 minutes ; après quoi la pression est abaissée jusqu'à $2 \cdot 10^{-5}$ torrs pour procéder à l'évaporation de l'alliage.

L'épaisseur de chacune des couches peut être mesurée de diverses manières connues de l'homme de l'art. C'est ainsi que l'on peut évaporer une masse déterminée de matière à déposer, mesurer la dérive en fréquence d'un quartz piézoélectrique dans le champ des évaporateurs ou enfin prendre pour repères à l'aide d'un photomètre certaines caractéristiques optiques (transmission ou réflexion) du vitrage au cours des différentes phases du revêtement.

Lorsque la composition des alliages selon l'invention permet le tréfilage, ils peuvent être utilisés sous forme de tronçons de fils de longueur donnée enroulés sur des creusets formés eux-mêmes d'un fil de tungstène, méthode d'emploi industriel commode. C'est le cas en particulier pour les alliages appartenant à la famille préférée comportant 15,5 à 17,5 % en poids de chrome, 16 à 18 % de molybdène, 3,7 à 5,3 % de tungstène, jusqu'à 0,12 % de carbone, 0,2 à 0,4 % de vanadium, jusqu'à 2,5 % de cobalt, 4,5 à 7 % de fer et le complément essentiellement sous forme de nickel, et plus particulièrement de l'alliage commercialisé sous l'appellation HASTELLOY C 276. Les quatre exemples ci-après de mise en œuvre de l'invention, qui font tous appel à ce dernier alliage, montrent qu'il est possible, avec un choix judicieux de l'épaisseur de la couche d'ancrage et des autres couches de revêtement, de faire varier très largement les caractéristiques optiques (transmission, réflexion et couleur) du vitrage semi-réfléchissant résultant.

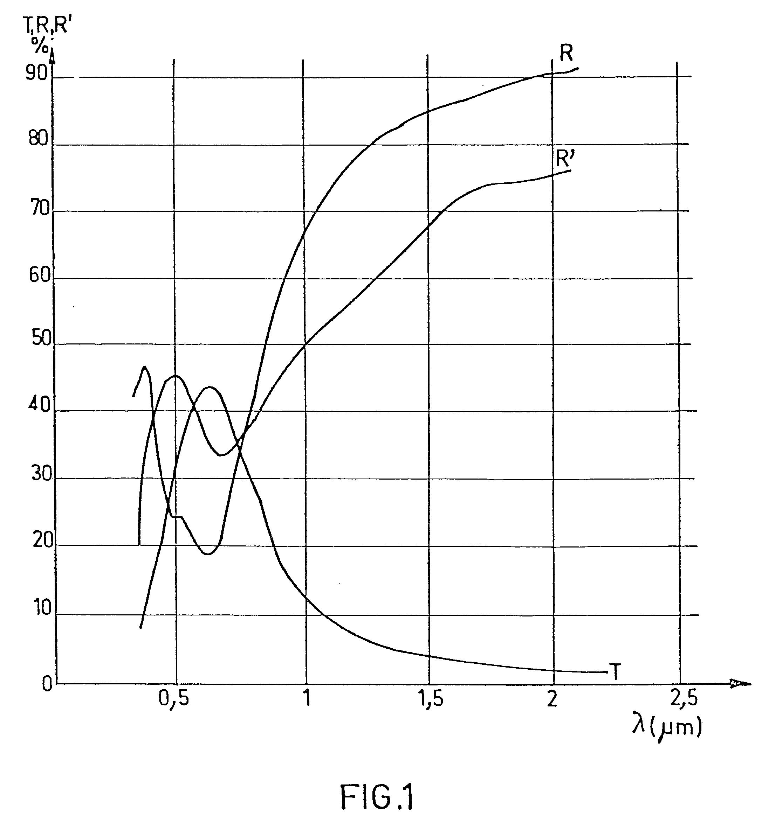

On s'y référera aux dessins annexés, sur lesquels les figures 1 à 4 représentent, pour chacun des exemples 1 à 4, les spectres de transmission (T), de réflexion du côté du verre (R') et de réflexion du côté portant les couches selon l'invention (R), exprimés en % en fonction de la longueur d'onde exprimée en $\mu$m.

Exemple 1

On dépose par vaporisation sous vide, sur un vitrage d'épaisseur 3 mm, un alliage commercialisé sous l'appellation Hastelloy C 276, ayant la composition nominale suivante (% en poids) : Ni : 55,05 %; Co : 2,5 %; Cr : 16 %; Mo : 16 %; W : 4 %; Fe : 5 %; Si : 0,08 %; Mn : 1 %; C : 0,02 %; V : 0,35 %.

On poursuit le dépôt de cette couche d'ancrage jusqu'à ce que la transmission du vitrage, pour une longueur d'onde de 0,55 µm, ne représente plus que 70 % de la transmission initiale. La longueur d'onde de 0,55 µm a été retenue, car elle correspond sensiblement à la longueur d'onde de sensibilité maximale de l'œil humain.

On dépose ensuite, toujours par évaporation sous vide, une couche d'or, jusqu'à ce que la transmission, pour la longueur d'onde de 0,55 µm, soit comprise entre 28 et 29 % de la transmission initiale.

On procède enfin au dépôt d'un diélectrique qui, dans le cas présent, est du sulfure de zinc. De façon connue, au cours de ce dépôt et du fait de l'effet interférentiel, la transmission commence par augmenter, passe par un maximum et décroît ensuite. L'évaporation du sulfure de zinc est arrêtée lorsque la transmission représente 40 % de la transmission initiale.

On obtient ainsi un vitrage d'aspect assez neutre, quand on le regarde du côté du verre. Ce vitrage présente d'excellentes propriétés antisolaires.

La figure 1 représente les spectres de transmission (T) et de réflexion (R du côté des couches et R' du côté du verre) du vitrage semi-réfléchissant ainsi réalisé. Si l'on considère, d'une part, la répartition énergétique du spectre solaire et, d'autre part, la courbe de sensibilité de l'œil humain, on peut calculer, de façon usuelle, à partir de la courbe de transmission T, les deux valeurs caractéristiques que sont le facteur d'énergie totale transmise (FET en %) et le facteur de transmission lumineuse (Y en %) pour l'illuminant C.

Dans le cas de ce vitrage et à partir des courbes de la figure 1, on constate que FET = 24 %, tandis que Y = 36 %, ce qui prouve que le vitrage ainsi métallisé est un excellent vitrage anti-solaire.

Exemple 2

Sur un vitrage d'épaisseur 3 mm, on dépose, par évaporation sous vide, un alliage ayant la composition de l'exemple 1.

On arrête le dépôt lorsque la transmission du vitrage, pour une longueur d'onde de 0,55 µm ne représente plus que 80 % de la transmission initiale.

On procède ensuite au dépôt d'une couche d'or, jusqu'à ce que la transmission à 0,55 µm soit égale à 47 % de la transmission initiale.

On dépose ensuite du sulfure de zinc, constituant le diélectrique. Comme précédemment, par effet interférentiel, la transmission commence par augmenter, passe par un maximum, puis décroît. On arrête le dépôt lorsque la transmission représente 63 % de la transmission initiale.

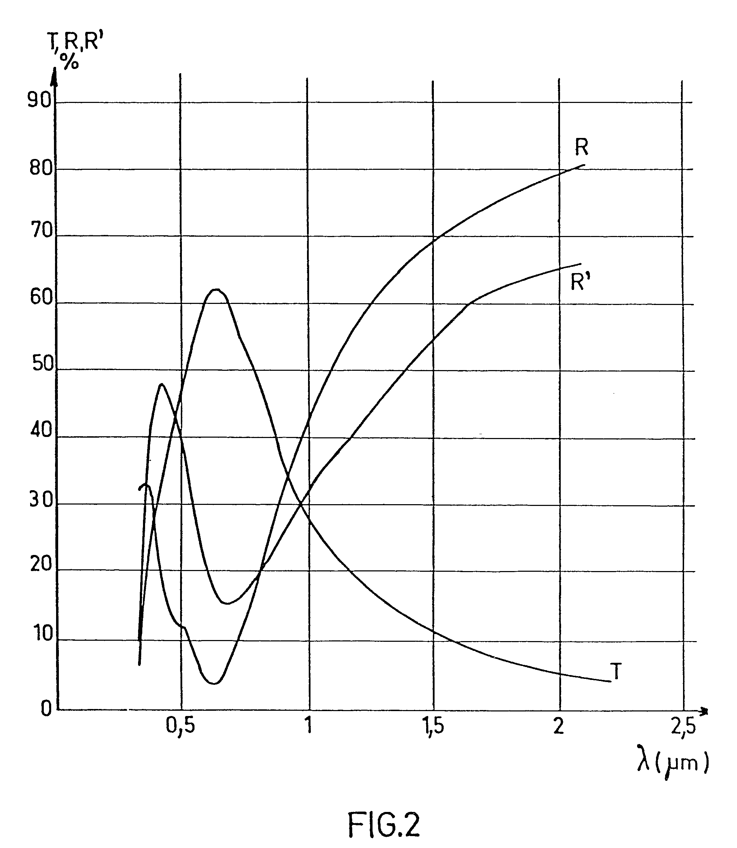

On obtient ainsi un vitrage de teinte bleue, lorsqu'on le regarde du côté du verre. La figure 2 représente les spectres de transmission (T) et de réflexion (R du côté des couches selon l'invention, et R' du côté du verre) de ce vitrage, qui présente de bonnes caractéristiques antisolaires puisque son facteur d'énergie totale transmise et son facteur de transmission lumineuse sont les suivants :

$$FET = 42 \% \quad Y = 57 \%$$

Exemple 3

On dépose, toujours par évaporation thermique, sur un vitrage d'épaisseur 3 mm, un alliage ayant la composition de l'exemple 1, jusqu'à ce que sa transmission, pour une longueur d'onde de 0,55 µm, ne représente plus que 80 % de la transmission initiale.

On dépose ensuite une couche d'or, jusqu'à ce que la transmission ne soit plus que 47 % de la transmission initiale.

On évapore ensuite du sulfure de zinc formant le diélectrique, ce qui provoque une augmentation de la transmission. On arrête le dépôt de sulfure de zinc lorsque la transmission atteint 50 % de la transmission initiale.

On obtient ainsi un vitrage de teinte cuivrée, ayant d'excellentes caractéristiques antisolaires.

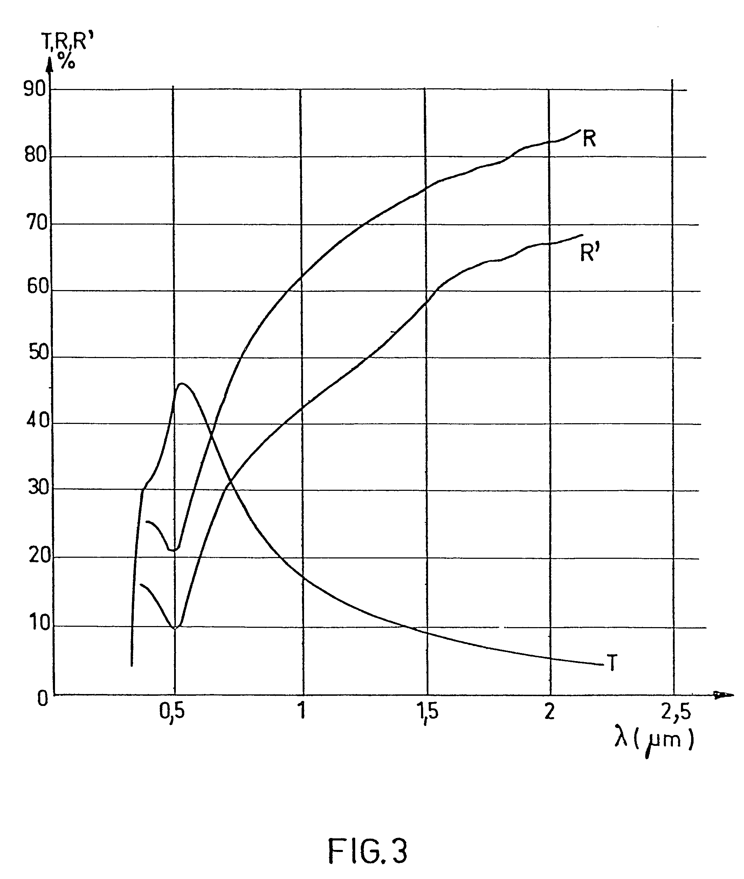

La figure 3 représente le spectre de transmission T et les spectres de réflexion R et R' de ce vitrage, respectivement du côté des couches selon l'invention et du côté du support. Le facteur d'énergie totale transmise (FET) est égal à 29 % et le facteur de transmission lumineuse (Y) à 44 %.

Exemple 4

On dépose sur un vitrage d'épaisseur 3 mm, par évaporation, un alliage ayant la composition de l'exemple 1. On arrête l'évaporation lorsque la transmission, pour une longueur d'onde de 0,55 µm, représente 95 % de la transmission initiale.

On dépose ensuite une couche d'or, jusqu'à ce que la transmission tombe à 75 % de sa valeur initiale.

On évapore enfin du sulfure de zinc, formant le diélectrique, jusqu'à ce qu'on atteigne un maximum dans les indications du photomètre.

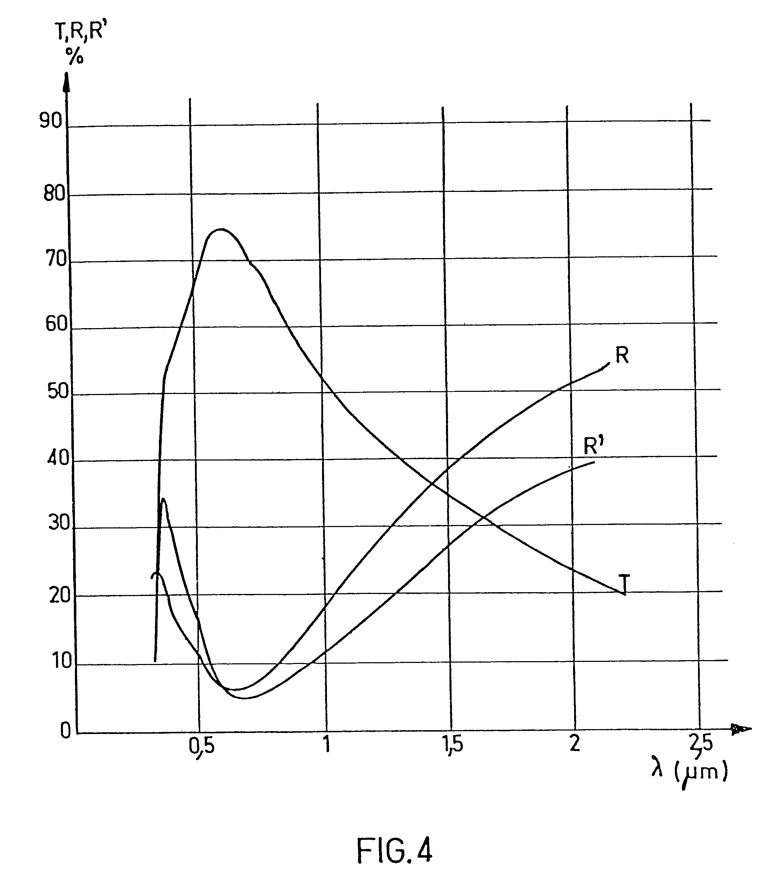

Le spectre de transmission et les spectres de réflexion R (du côté des couches) et R' (de l'autre côté du vitrage) sont représentés sur la figure 4.

Les facteurs d'énergie totale transmise (FET) et de transmission lumineuse (Y) de ce vitrage sont respectivement égaux à 60 % et 72 %.

On obtient ainsi un vitrage qui conjugue une bonne transparence dans le domaine visible du spectre solaire et une bonne réflexion du rayonnement infra-rouge.

Les exemples ci-dessus, qui ont été réalisés avec une corrosion de creusets pratiquement négligeable, montrent que l'alliage considéré présente l'avantage de constituer une excellente couche d'ancrage pour des revêtements très divers de vitrages semi-réfléchissants. En outre, l'adhérence obtenue à l'aide d'une telle couche d'ancrage permet d'utiliser lesdits vitrages dans des vitrages composites feuilletés.

**Revendications**

1. Procédé de fabrication d'un vitrage à revêtement métallisé semi-réfléchissant comprenant un support rigide transparent tel que feuille de verre muni d'au moins une couche déposée par évaporation thermique sous vide d'un alliage contenant du nickel et du chrome à l'aide de creusets d'évaporation en un métal très réfractaire, caractérisé en ce que ledit alliage comporte en outre du molybdène et éventuellement du tungstène, du fer et/ou du cobalt, les teneurs cumulées en molybdène et tungstène étant comprises entre 3 et 28 % en poids, les teneurs cumulées en nickel, fer et cobalt entre 55 et 75 %, et la teneur en chrome entre 5 et 31 %.

2. Procédé selon la revendication 1, caractérisé en ce que la teneur en fer est inférieure au tiers de la teneur cumulée en nickel, fer et cobalt.

3. Procédé selon la revendication 2, caractérisé en ce que ledit alliage comporte de 40 à 63 % en poids de nickel, de 2 à 20 % de fer, avec une teneur cumulée en nickel, fer et cobalt de 58 à 68 %, 15 à 25 % de chrome, 5 à 18 % de molybdène et 0 à 6 % de tungstène, avec des teneurs cumulées en molybdène et tungstène de 5 à 22 %.

4. Procédé selon la revendication précédente, caractérisé en ce que ledit alliage comporte 15,5 à 17,5 % en poids de chrome, 16 à 18 % de molybdène, 3,7 à 5,3 % de tungstène, jusqu'à 0,12 % de carbone, 0,2 à 0,4 % de vanadium, jusqu'à 2,5 % de cobalt, 4,5 à 7 % de fer, et le complément essentiellement sous forme de nickel.

5. Procédé selon l'une des revendications précédentes, caractérisé en ce que ledit métal très réfractaire est le tungstène.

6. Procédé selon l'une des revendications précédentes, caractérisé en ce que ladite couche est une couche d'ancrage sur laquelle est déposée une couche semi-réfléchissante d'or, d'argent ou de cuivre.

7. Procédé selon la revendication précédente, caractérisé en ce que sur ladite couche semi-réfléchissante est déposée une couche d'un diélectrique, notamment d'oxyde de silicium, de sulfure de zinc ou d'un oxyde mixte d'indium et d'étain.

8. Procédé selon la revendication précédente, caractérisé en ce qu'on effectue entre la couche semi-réfléchissante et la couche de diélectrique, un dépôt par évaporation thermique sous vide d'un alliage identique à celui utilisé pour la couche d'ancrage.

9. Procédé selon l'une quelconque des revendications précédentes, caractérisé en ce que, sur ledit revêtement métallisé, on applique au moins une feuille de matériau rigide transparent en interposant une couche intercalaire de matière plastique d'adhérence, constituant ainsi un vitrage composite feuilleté.

10. Procédé selon la revendication précédente, caractérisé en ce que la couche intercalaire est constituée de polyvinylbutyral.

## Claims

1. Method of making a pane having a semi-reflecting metallised coating comprising a transparent rigid support such as a glass sheet provided with at least one layer deposited by thermal evaporation under vacuum of an alloy containing nickel and chromium by means of evaporation crucibles of a very refractory metal, characterised in that said alloy further comprises molybdenum and optionally tungsten, iron and/or cobalt, the total content of molybdenum and tungsten being from 3 to 28 % by weight, the total content of nickel, iron and cobalt being from 55 to 75 % and the content of chromium being from 5 to 31 %.

2. Method according to claim 1, characterised in that the content of iron is less than one third of the total content of nickel, iron and cobalt.

3. Method according to claim 2, characterised in that said alloy comprises from 40 to 63 % by weight of nickel, 2 to 20 % by weight of iron, with a total content of nickel, iron and cobalt from 58 to 68 %, 15 to 25 % chromium, 5 to 18 % molybdenum and 0 to 6 % tungsten, with total contents of molybdenum and tungsten from 5 to 22 %.

4. Method according to the preceding claim, characterised in that said alloy comprises 15.5 to 17.5 % by weight of chromium, 16 to 18 % of molybdenum, 3.7 to 5.3 % of tungsten, up to 0.12 % of carbon, 0.2 to 0.4 % of vanadium, up to 2.5 % of cobalt, 4.5 to 7 % of iron, and the remainder essential of nickel.

5. Method according to one of the preceding claims, characterised in that said very refractory metal is tungsten.

6. Method according to one of the preceding claims, characterised in that said layer is an anchoring layer on which is deposited a semi-reflecting layer of gold, silver or copper.

7. Method according to the preceding claim, characterised in that on said semi-reflecting layer is deposited a layer of a dielectric, notably silicon oxide, zinc sulphide or a mixed oxide of indium and tin.

8. Method according to the preceding claim, characterised in that there is effected, between the semi-reflecting layer and the dielectric layer, deposition by thermal evaporation under vacuum of an alloy identical to that used for the anchoring layer.

9. Method according to any one of the preceding claims, characterised in that, on said metallised coating, there is applied at least one sheet of transparent rigid material with interposition of an intermediate layer of plastics material for adhesion, thus forming a composite laminated pane.

10. Method according to the preceding claim, characterised in that the intermediate layer is formed of polyvinylbutyral.

## Ansprüche

1. Verfahren zur Herstellung eines Glases mit einer metallisierten, halbreflektierenden Beschichtung mit einem starren, durchsichtigen Träger, wie einer Glasplatte, mit wenigstens einer durch thermische Verdampfung unter Vakuum aufgetragenen Schicht aus einer Nickel-Chrom-Legierung mit Hilfe von Verdampfungsschmelztiegeln aus einem hochfeuerfesten Metall, dadurch gekennzeichnet, daß die Legierung außerden Molybdän und gegebenenfalls Wolfram, Eisen und/oder Kobalt enthält, wobei der Gesamtgehalt an Molybdän und Wolfram zwischen 3 und 28 Gew.-%, der Gesamtgehalt an Nickel, Eisen und Kobalt zwischen 55 und 75 % und der Gehalt an Chrom zwischen 5 und 31 % liegen.

2. Verfahren nach Anspruch 1, dadurch gekennzeichnet, daß der Gehalt an Eisen um ein Drittel geringer ist als der Gesamtgehalt an Nickel, Eisen und Kobalt.

3. Verfahren nach Anspruch 2, dadurch gekennzeichnet, daß die Legierung 40-63 Gew.-% Nickel, 2-20 % Eisen, mit einem Gesamtgehalt an Nickel, Eisen und Kobalt von 58-68 %, 15-25 % Chrom, 5-18 % Molybdän und 0-6 % Wolfram mit einem Gesamtgehalt an Molybdän und Wolfram von 5-22 % enthält.

4. Verfahren nach einem der vorstehenden Ansprüche, dadurch gekennzeichnet, daß die Legierung 15,5-17,5 Gew.-% Chrom, 16-18 % Molybdän, 3,7-5,3 % Wolfram, bis zu 0,12 Gew.-% Kohlenstoff, 0,2-0,4 % Vanadium, bis zu 2,5 % Kobalt, 4,5-7 % Eisen und den Rest im wesentlichen in Form von Nickel enthält.

5. Verfahren nach einem der vorhergehenden Ansprüche, dadurch gekennzeichnet, daß das hochfeuerfeste Metall Wolfram ist.

6. Verfahren nach einem der vorhergehenden Ansprüche, dadurch gekennzeichnet, daß die Schicht eine Haftschicht ist, auf der eine halbreflektierende Schicht aus Gold, Silber oder Kupfer aufgetragen wird.

7. Verfahren nach dem vorhergehenden Anspruch, dadurch gekennzeichnet, daß auf die halbreflektierende Schicht eine dielektrische Schicht aufgetragen wird, insbesondere aus Siliziumoxid, Zinksulfid oder einer Mischung aus Indium- und Zinnoxid.

8. Verfahren nach dem vorhergehenden Anspruch, dadurch gekennzeichnet, daß zwischen die halbreflektierende Schicht und die dielektrische Schicht eine der Haftschicht entsprechende Schicht durch thermische Vakuumverdampfung aufgebracht wird.

9. Verfahren nach einem der vorhergehenden Ansprüche, dadurch gekennzeichnet, daß auf die metallisierte Schicht wenigstens eine Schicht aus durchsichtigem, starren Material aufgebracht wird, indem man eine Zwischenschicht aus haftendem Kunststoff dazwischenschaltet, so daß eine mehrschichtige Scheibe entsteht.

10. Verfahren nach dem vorhergehenden Anspruch, dadurch gekennzeichnet, daß die Zwischenschicht aus Polyvinylbutyral besteht.

FIG.1

FIG.2

FIG. 3

FIG.4